Europäisches Patentamt

European Patent Office

Office européen des brevets

(19)

(11) Veröffentlichungsnummer: **0 104 317**
**B1**

(12) **EUROPÄISCHE PATENTSCHRIFT**

(45) Veröffentlichungstag der Patentschrift:
**01.04.87**

(21) Anmeldenummer: **83105504.1**

(22) Anmeldetag: **03.06.83**

(51) Int. Cl.⁴: **C 09 K 3/10, F 16 J 15/10,
D 21 H 5/00**

(54) **Weichstoffflachdichtungsmaterial, insbesondere für die Herstellung von hoch beanspruchbaren Flachdichtungen.**

(30) Priorität: **30.08.82 DE 3232255**

(43) Veröffentlichungstag der Anmeldung:
**04.04.84 Patentblatt 84/14**

(45) Bekanntmachung des Hinweises auf die Patenterteilung:
**01.04.87 Patentblatt 87/14**

(84) Benannte Vertragsstaaten:
**DE FR GB IT NL SE**

(56) Entgegenhaltungen:
**EP - A - 0 027 706
DE - A - 3 204 634
GB - A - 2 019 507
GB - A - 2 047 298
US - A - 4 271 228
US - A - 4 279 696
US - A - 4 317 575
US - A - 4 373 992**

(73) Patentinhaber: **GOETZE AG,
Bürgermeister-Schmidt-Strasse 17,
D-5093 Burscheid 1 (DE)**
Patentinhaber: **Frenzelit Werke GmbH & Co. KG,
Frankenhammer/Postfach 1140, D-8582 Bad Berneck
(DE)**

(72) Erfinder: **Beyer, Horst, Dr., Finkenweg 12,
D-5093 Burscheid (DE)**
Erfinder: **Haack, Hans, Gottliebstalerstrasse 6,
D-8582 Bad Berneck (DE)**
Erfinder: **Zerfass, Hans-Rainer, Dr.,
Bürgermeister-Schmidt-Strasse 79, D-5093 Burscheid
(DE)**
Erfinder: **Kutnar, Franz, Bismarckstrasse 18 1/2,
D-8580 Bayreuth (DE)**
Erfinder: **Bechen, Heribert, Wichheimer Strasse 305,
D-5000 Köln 89 (DE)**

## Beschreibung

Die Erfindung betrifft ein Weichstoffflachdichtungsmaterial, insbesondere für die Herstellung von hoch beanspruchbaren Flachdichtungen, wie Zylinderkopfdichtungen, Auspuffflanschdichtungen und ähnlichen für Verbrennungskraftmaschinen, bestehend aus einem asbestfreien und gegebenenfalls metallisch verstärkten Faservlies mit Fasern synthetischen oder natürlichen, organischen oder anorganischen Ursprunges und gegebenenfalls einer Imprägnation des Faservlieses aus im Endzustand plastisch oder elastisch vernetzten, synthetischen, organischen Substanzen.

Herkömmliche Weichstoffzylinderkopfdichtungen für Verbrennungskraftmaschinen bestehen in der Praxis aus gegebenenfalls metallisch verstärkten Asbestfaservliesen. Diese können beispielsweise nach der DE-AS 2 304 558 mit einer im Endzustand plastisch oder elastisch vernetzten Substanz imprägniert sein.

Asbestfasern sind in Bezug auf ihre physikalischen und chemischen Eigenschaften für die Herstellung von Faservliesdichtungsplatten für Zylinderkopfdichtungen der ideale Werkstoff. Asbestfasern sind bekanntlich temperaturbeständig sowie ausreichend weich und elastisch verformbar, und sie lassen sich in papierherstellungsähnlichen Prozessen zu Faservliesstoffen mit für Zylinderkopfdichtungen geeigneter Verformbarkeit, Festigkeit, Porosität und Beständigkeit verarbeiten. Andererseits sind Asbestfasern und Asbeststäube bekanntlich stark gesundheitsgefährdend, so dass erwartungsgemäss in der Zukunft die Verwendung von Asbest stark eingeschränkt und für die Herstellung bestimmter Produkte sogar gänzlich verboten werden wird.

Man hat daher schon versucht, Weichstoffdichtungsplatten aus Faservliesen auf der Basis von anorganischen oder organischen Natur- oder Synthesefasern herzustellen. Da die bisher bekannten Fasern alleine nicht alle idealen physikalischen Eigenschaften von Asbest zugleich besitzen, hat man beispielsweise nach der DE-PS 2 914 173 für die Herstellung von Faservliesstoffen für Zylinderkopfdichtungen versucht, Gemische zweier verschiedener Faserarten, nämlich organische Naturfasern einerseits und organische oder anorganische Synthesefasern andererseits, miteinander zu kombinieren. Nach der EP-PA 0 027 706 bestehen asbestfreie Papiere aus 20 bis 40% Mineralfaser, 5 bis 15% organischer Naturfaser, 10 bis 70% mineralischem Füllstoff, 10 bis 20% Nitril-Kautschuk sowie gegebenenfalls 0,5 bis 2,5 Gewichts-% Kohlenstoffaser. Nach beispielsweise der DE-PS 2 730 588 bestehen die Faservliesbahnen für insbesondere die Herstellung von Bodenbelägen, Dichtungsplatten oder Wandverkleidungen aus 40 bis 60% pflanzlicher Faser, 10 bis 30% Latexbindemittel und 10 bis 50% feinkörnigen mineralischen Füllstoffen.

Die aus diesen Materialkombinationen hergestellten Zylinderkopfdichtungen für Verbrennungskraftmaschinen waren jedoch noch nicht voll befriedigend, und derartigen Dichtungen waren die bisher verwendeten Zylinderkopfdichtungen mit Asbestfaservliesen in Bezug auf die geforderten, ganz spezifischen technologischen Eigenschaften noch überlegen. So zeigte vor allem das Plattenmaterial der DE-OS 2 730 588 nicht die für Zylinderkopfdichtungen geforderte hohe Festigkeit und Temperaturbeständigkeit, und sowohl das Plattenmaterial der DE-OS 2 730 588 als auch der DE-PS 2 914 173 und der EP-PA 0 027 706 liess sich nicht ausreichend auf die geforderte Dichte beziehungsweise Porosität verdichten, so dass vor allem das Material anschliessend nicht mehr ausreichend imprägniert werden konnte.

Der vorliegenden Erfindung liegt daher die Aufgabe zugrunde, ein asbestfreies Weichstoffflachdichtungsmaterial zu schaffen, welches sich insbesondere für die Herstellung hoch beanspruchbarer Flachdichtungen, wie Zylinderkopfdichtungen, Auspuffflanschdichtungen und ähnlichen für Verbrennungskraftmaschinen verwenden lässt. Die aus dem neuen Material hergestellten Flachdichtungen sollen etwa die gleichen technologischen Eigenschaften wie die bisherigen, auf der Basis von Asbestfasern hergestellten Dichtungen besitzen. Insbesondere sollen die Flachdichtungen sich mit dem gewünschten Porenfüllungsgrad mit im Endzustand plastisch oder elastisch vernetzten Substanzen imprägnieren lassen.

Erfindungsgemäss wird diese Aufgabe durch ein Weichstoffflachdichtungsmaterial gelöst, dessen Faservlies aus untereinander vermischten, mindestens drei verschiedenen Faserarten, nämlich

a) organischen, gegebenenfalls durch thermische oder physikalische Verfahren aufbereiteten Naturfasern,

b) organischen Synthesefasern und

c) gegebenenfalls durch ein chemisches oder physikalisches Verfahren aufbereiteten Mineralfasern

sowie pulverförmigen bis feinfaserigen Füllstoffen sowie mindestens einem organischen Bindemittel besteht. Als vierte Faserart kann das Faservlies zusätzlich vor allem Metallfasern enthalten.

Bevorzugt enthält das Faservlies der Flachdichtungsplatte dann 15 bis 60 Gewichtsprozent Faseranteil, 30 bis 70 Gewichtsprozent pulverförmige und/oder feinfaserige Füllstoffe und 3 bis 15 Gewichtsprozent organische Bindemittel.

Der Faseranteil des Faservlieses ist zusammengesetzt aus 5 bis 40 Gewichtsprozent organischer Synthesefaser, 5 bis 25 Gewichtsprozent organischer, gegebenenfalls thermisch oder physikalisch aufbereiteter Naturfaser und 35 bis 90 Gewichtsprozent Mineralfaser und gegebenenfalls Metallfaser. Der Volumenanteil der Fasern im Faservlies soll vorzugsweise, und zwar vor der gegebenenfalls erforderlichen Vereinigung mit den metallischen Trägerplatten und vor der erforderlichen Endverdichtung, mindestens 30 Volumenprozent betragen.

Im Faservlies sollen mindestens 10% der Fasern geeignet sein, in einem Papier- oder Pappherstellungsverfahren, und zwar dann, wenn sie alleine eingesetzt werden, eine papierblattähnliche Struktur zu bilden. Derartige Fasern sind bevorzugt gegebenenfalls chemisch und/oder physikalisch aufbereitete pflanzliche Fasern und/oder gegebenenfalls durch Fibrillierung aufbereitete organische Synthesefasern.

Als organische Synthesefasern werden bevorzugt temperaturbeständige Polyamid-, Polyaramid- und/oder Polyacrylnitrilfasern verwendet. Die Mineralfasern sind vor allem Steinwollfasern, Glaswollfasern, Schlackenwollfasern und/oder Aluminiumsilikatfasern, deren Oberflächen gegebenenfalls durch chemische Verfahren, wie bevorzugt Silanierung, besonders haftfähig gemacht sind. Die pulverförmigen Füllstoffe sind bevorzugt anorganischen Ursprungs und bestehen aus Kaolin, Porzellanerde, Siliziumdioxid, Calciumsilikat, gemahlener Schlacke, Diatomeenerde oder auch Metallpulver. Die feinfaserigen Füllstoffe sind bevorzugt gemahlene Mineralfasern mit Längen unter 0,4 mm. Die verwendeten organischen Naturfasern können tierischen oder pflanzlichen Ursprungs sein, und verwendet wird insbesondere Baumwolle, Cellulose oder aber auch tierische Wolle. Die chemische Aufbereitung erfolgt bevorzugt bei den pflanzlichen Fasern durch insbesondere Sulfurierungs-Prozesse, und die physikalische Aufbereitung erfolgt vorzugsweise durch Mahlprozesse, die eine Fibrillierung der Fasern hervorrufen. Die Faserlängen der organischen Naturfasern und der organischen Synthesefasern liegen bevorzugt zwischen 0,5 und 6 mm, während die Längen der mineralischen und der Metallfasern bevorzugt zwischen 0,5 und 4 mm liegen.

Zur Herstellung des erfindungsgemässen Weichstoffflachdichtungsmaterials werden bevorzugt wässrige Aufschlämmungen der Faser-, Füllstoff- und Bindemittelgemische auf Papier- oder Pappherstellungsmaschinen eingesetzt, und zwar so, dass das Porenvolumen des getrockneten Faservlieses mindestens 10 Volumenprozent beträgt. Diese Faservliese werden dann ein- oder beidseitig auf den gegebenenfalls als Rauhblech ausgebildeten Trägerkörper aufgewalzt.

Im Sinne der Erfindung können natürlich auch aus den Faservliesen und den Trägerkörpern zunächst separat die Konturen der Flachdichtungen herausgestanzt werden, und das Vereinigen erfolgt als nächster Verfahrensschritt. Das erzielte Porenvolumen des Faservlieses soll nach dem Aufwalzen zwischen 10 und 60 Volumenprozent betragen. Die fertig gestanzten und gegebenenfalls mit Einfassungen an den Durchgangsöffnungen versehenen Flachdichtungen können dann mit bevorzugt vernetzbaren organischen synthetischen Mitteln imprägniert werden, und das Imprägniermittel wird dann anschliessend auf einen plastischen oder elastischen Endzustand bevorzugt thermisch vernetzt.

Die Flachdichtungen können aber auch im Sinne der Erfindung hergestellt werden, indem man die Mischungen aus Fasern, Füllstoffen und Bindemittel gegebenenfalls unter Zugabe von 10 bis 50% vernetzbarer Flüssigkeit zu streichfähigen oder spritzfähigen Massen verarbeitet und mit Walzen oder Spritzmaschinen zu den fertigen Flachdichtungen mit den Trägerkörpern vereinigt.

Die auf diese Weise hergestellten Flachdichtungen wurden durch Messung ihres Funktionsverhaltens insbesondere in Bezug auf ihre Eignung zur Verwendung als Zylinderkopfdichtung untersucht. Zusätzlich wurden die so hergestellten Zylinderkopfdichtungen in Motoren getestet. Die Ergebnisse der Untersuchungen zeigten, dass das erfindungsgemässe Weichstoffflachdichtungsmaterial sowohl imprägniert als auch nicht imprägniert den bisher verwendeten, mit Asbestfaservliesen hergestellten Flachdichtungen ebenbürtig ist.

Durch die Erfindung ist somit ein asbestfreies Weichstoffdichtungsmaterial geschaffen, welches sich zur Herstellung von vor allem Zylinderkopfdichtungen und ähnlich belasteten Dichtungen, wie beispielsweise Auspuffflanschdichtungen, eignet.

Dabei ist es erfindungswesentlich, mindestens drei verschiedene Faserarten mit unterschiedlichen physikalischen und chemischen Eigenschaften für das Faservlies zu verwenden. Die verwendeten organischen Naturfasern sind dabei offensichtlich vor allem verantwortlich für die Bildung eines festen papierähnlichen Faservlieses, die verwendeten organischen Synthesefasern verleihen dem Faservlies offensichtlich die geforderte elastische Verformbarkeit, und durch die Verwendung von Metall- und/oder Mineralfasern in Verbindung mit den Füllstoffen wird die geforderte hohe Temperaturbeständigkeit erreicht, so dass sich die physikalischen und chemischen Eigenschaften in Kombination zu denen der bisher eingesetzten Asbestfasern addieren. Die mineralischen Füllstoffe bewirken dabei gleichzeitig die gute Verformbarkeit der Platten zu einer gewünschten Dicke und Porosität, so dass die Platten sich mit dem erforderlichen Porenfüllungsgrad imprägnieren lassen.

Erfindungswesentlich ist gleichzeitig die Herstellung des Weichstoffmaterials aus den angegebenen definierten Faser-, Füllstoff- und Bindemittelmengen. Durch die gemäss der Erfindung eingesetzten Mengenverhältnisse, Volumenverhältnisse und Faserlängen ist es gelungen, dem Faservlies eine papierblattähnliche Struktur zu geben und das Faservlies vor allem gleichzeitig ausreichend fest, temperaturbeständig und elastisch beziehungsweise kompressibel zu gestalten.

Wesentlich ist dabei der Einsatz der Füllstoffe. Es wurde gefunden, dass nur bei Verwendung der Füllstoffe im erfindungsgemässen Verhältnis Füllstoff zu Faseranteil sich der Weichstoff optimal mit geringen Kräften durch Aufwalzen oder Aufpressen zu einem gewünschten Porenvolumen oder Porendurchmesser verdichten lässt. Gegenüber den bekannten Weichstoffmaterialien aus asbestfreien Faservliesen sind die Verdichtungskräfte wesentlich geringer, und ein zu starkes Aufquellen des Materials nach dem Verdichten wird so verhindert.

Anhand von drei Ausführungsbeispielen werden die bevorzugt verwendeten Zusammensetzungen der erfindungsgemässen Faservliese dargestellt:

Beispiel 1

Ausgegangen wird von einem Gemisch aus

15% Polyaramid mit durchschnittlicher Faserlänge von 2 mm

10% Sulfatzellstoff mit durchschnittlicher Faserlänge von 3 mm

35% Steinwolle mit durchschnittlicher Faserlänge von 2 mm

35% Siliziumkarbid als Füllstoff

5% NBR-Latex als Bindemittel

Aus der Aufschlämmung werden Faservliesplatten mit einem Flächengewicht von 1000 g/m² hergestellt und unter Kombination mit einem Rauhblech zu Weichstoffdichtungsplatten vereinigt. Die anschliessende Imprägnation eines Teiles der Dichtungsplatte erfolgt entsprechend den Vorschriften der DE-AS 2 304 558.

An den fertiggestellten Dichtungsplatten werden Wasserdichtigkeit und Kompressibilität gemessen. Sowohl bei imprägnierten als auch bei nicht imprägnierten Dichtungsplatten sind die Werte für die Herstellung von Zylinderkopfdichtungen geeignet.

Beispiel 2

Ausgegangen wird von einem Gemisch aus

10% Polyaramid (Faserlänge 2 mm)

5% Polyacrylnitril (Faserlänge 2 mm)

8% Baumwolle (Faserlänge 3 mm)

7% Sulfatzellstoff (Faserlänge 3 mm)

20% Steinwolle (Faserlänge 2 mm)

20% Siliziumdioxid (max. Korngrösse 0,1 mm)

23% Porzellanerde (max. Korngrösse 0,1 mm)

7% NBR-Latex als Bindemittel

Die Herstellung der Dichtungsplatten erfolgt wie im Beispiel 1. Die gemessenen technologischen Werte zeigen die Eignung des Materials für die Herstellung von Zylinderkopfdichtungen.

Beispiel 3

Ausgegangen wird von einem Gemisch aus

20% Polyaramid (Faserlänge 2 mm)

10% Baumwolle (Faserlänge 3 mm)

20% Steinwolle (Faserlänge 2 mm)

25% Glimmer (max. Korngrösse 0,1 mm)

15% Schwerspat (max. Korngrösse 0,1 mm)

10% NBR-Latex als Bindemittel

Die entsprechend Beispiel 1 hergestellten Dichtungsplatten zeigen für die Herstellung von Zylinderkopfdichtungen geeignete Werte.

**Patentansprüche**

1. Weichstoffflachdichtungsmaterial, insbesondere für die Herstellung von hoch beanspruchbaren Flachdichtungen, wie Zylinderkopfdichtungen, Auspuffflanschdichtungen und ähnlichen für Verbrennungskraftmaschinen, mit einem asbestfreien und gegebenenfalls metallisch verstärkten Fasermaterial mit Fasern anorganischen oder organischen, synthetischen oder natürlichen Ursprunges und organischen Bindemitteln, dadurch gekennzeichnet, dass das Weichstoffflachdichtungsmaterial aus einem Faservlies mit untereinander vermischten, mindestens drei verschiedenen Faserarten, nämlich

a) organischen, gegebenenfalls thermisch oder physikalisch aufbereiteten Naturfasern,

b) organischen Synthesefasern,

c) gegebenenfalls thermisch oder physikalisch aufbereiteten Mineralfasern und

d) gegebenenfalls Metallfasern sowie pulverförmigen bis feinfaserigen Füllstoffen und mindestens einem organischen Bindemittel besteht.

2. Weichstoffflachdichtungsmaterial nach Anspruch 1, dadurch gekennzeichnet, dass das Faservlies der Flachdichtungsplatte 15 bis 60% Faseranteil, 30 bis 70% feinfaserige und/oder pulverförmige Füllstoffe und 3 bis 15% organische Bindemittel enthält.

3. Weichstoffflachdichtungsmaterial nach mindestens einem der Ansprüche 1 und 2, dadurch gekennzeichnet, dass der Faseranteil 5 bis 40% Synthesefaser, 5 bis 25% organische, gegebenenfalls chemisch oder physikalisch aufbereitete Naturfaser und 35 bis 90% Mineralfaser und gegebenenfalls Metallfaser enthält.

4. Weichstoffflachdichtungsmaterial nach mindestens einem der Ansprüche 1 bis 3, dadurch gekennzeichnet, dass der Volumenanteil der Fasern im Faservlies vor der gegebenenfalls erforderlichen Vereinigung mit der metallischen Verstärkung mindestens 30% beträgt.

5. Weichstoffflachdichtungsmaterial nach mindestens einem der Ansprüche 1 bis 4, dadurch gekennzeichnet, dass mindestens 10% der Fasern in einem Papier- oder Pappherstellungsverfahren zur Blattbildung geeignete Fasern sind.

6. Weichstoffflachdichtungsmaterial nach mindestens einem der Ansprüche 1 bis 5, dadurch gekennzeichnet, dass die zur Blattbildung geeigneten Fasern aus gegebenenfalls chemisch und/oder physikalisch aufbereiteter Naturfaser und/oder durch Fibrillierung aufbereiteter organischer Synthesefaser bestehen.

7. Weichstoffflachdichtungsmaterial nach mindestens einem der Ansprüche 1 bis 6, dadurch gekennzeichnet, dass die organischen Synthesefasern Polyamid-, Polyaramid- und/oder Polyacrylnitrilfasern sind.

8. Weichstoffflachdichtungsmaterial nach mindestens einem der Ansprüche 1 bis 7, dadurch gekennzeichnet, dass die Mineralfasern Steinwollfasern, Glaswollfasern, Schlackenwollfasern und/oder Aluminiumsilikatfasern sind.

9. Weichstoffflachdichtungsmaterial nach mindestens einem der Ansprüche 1 bis 8, dadurch gekennzeichnet, dass die pulverförmigen und/oder feinfaserigen Füllstoffe Kaolin, Porzellanerde, Schwerspat, Talkum, Gips, Kreide, Titandioxid, Siliziumdioxid, Calciumsilikat, Metallpulver, gemahlene Schlacke, Diatomeenerde und/oder gemahlene Mineralfasern des Anspruches 8 sind.

10. Weichstoffflachdichtungsmaterial nach mindestens einem der Ansprüche 1 bis 9, dadurch gekennzeichnet, dass die organischen Naturfasern aus gegebenenfalls chemisch und/oder physikalisch tierischer, aufbereiteter Zell- oder Baumwolle und/oder tierischer Wolle bestehen.

11. Weichstoffflachdichtungsmaterial nach mindestens einem der Ansprüche 1 bis 10, dadurch gekennzeichnet, dass die Faserlänge der organischen Naturfaser und der organischen Synthesefaser zwischen 0,5 und 6 mm liegt.

12. Weichstoffflachdichtungsmaterial nach mindestens einem der Ansprüche 1 bis 11, dadurch gekennzeichnet, dass die Faserlänge der mineralischen Fasern und der Metallfasern zwischen 0,5 und 4 mm liegt.

13. Verfahren zur Herstellung des Weichstoffflachdichtungsmaterials nach mindestens einem der Ansprüche 1 bis 12, dadurch gekennzeichnet, dass der Weichstoffanteil der Flachdichtungsplatte aus einer wässrigen Aufschlämmung der Faseranteile, der Füllstoffanteile und der Bindemittelanteile auf einer Papier- oder Pappherstellungsmaschine zu einem Faservlies verarbeitet sind.

14. Verfahren zur Herstellung des Faservlieses nach Anspruch 13, dadurch gekennzeichnet, dass das Faservlies auf der Papier- oder Pappherstellungsmaschine mit einem Porenvolumen von mindestens 10 Volumenprozent hergestellt wird.

15. Verfahren zur Herstellung des Weichstoffflachdichtungsmaterials nach mindestens einem der Ansprüche 1 bis 14, dadurch gekennzeichnet, dass auf einem gegebenenfalls als Rauhblechplatte ausgebildeten Metallträger ein- oder beidseitig Faservliese aufgewalzt werden.

16. Verfahren zur Herstellung einer Flachdichtung aus dem Weichstoffflachdichtungsmaterial nach mindestens einem der Ansprüche 1 bis 14, dadurch gekennzeichnet, dass aus den Faservliesen und dem Metallträger die Konturen der Flachdichtung separat herausgestanzt und Faservlies und Metallträger zu einer Flachdichtung vereinigt werden.

17. Verfahren zur Herstellung eines Weichstoffflachdichtungsmaterials nach den Ansprüchen 15 und 16, dadurch gekennzeichnet, dass die Faservliese bei der Vereinigung mit der Trägerplatte auf ein Porenvolumen von 10 bis 60% verdichtet werden.

18. Verfahren zur Herstellung einer Flachdichtung aus dem Weichstoffflachdichtungsmaterial des Anspruches 15, dadurch gekennzeichnet, dass aus dem Weichstoffflachdichtungsmaterial die Konturen der Flachdichtung ausgestanzt werden.

19. Verfahren zur Herstellung einer Flachdichtung nach mindestens einem der Ansprüche 15 bis 18, dadurch gekennzeichnet, dass nach gegebenenfalls der Einfassung mindestens einer der Durchgangsöffnungen mit einem metallischen Kantenschutz die Flachdichtung mit einer im Endzustand plastisch oder elastisch vernetzten Substanz imprägniert wird.

20. Verfahren zur Herstellung des Weichstoffflachdichtungsmaterials nach mindestens einem der Ansprüche 1 bis 12, dadurch gekennzeichnet, dass auf eine gegebenenfalls auf die Konturen einer Flachdichtung gestanzte Trägerplatte ein- oder beidseitig eine streichfähige Masse aus Faseranteil, Füllstoffanteil und Bindemittel entsprechend den Zusammensetzungen der Ansprüche 1 bis 12 aufgewalzt wird.

21. Verfahren zur Herstellung des Weichstoffflachdichtungsmaterials nach mindestens einem der Ansprüche 1 bis 12, dadurch gekennzeichnet, dass ein spritzfähiges Material aus Faseranteil, Füllstoffanteil und Bindemittel entsprechend den Ansprüchen 1 bis 12 auf einer Spritzgussmaschine zu einer fertigen Flachdichtung mit gegebenenfalls einer metallischen Verstärkungseinlage geformt und ausgehärtet wird.

22. Verfahren zur Herstellung des Weichstoffflachdichtungsmaterials nach den Ansprüchen 20 oder 21, dadurch gekennzeichnet, dass zur Bildung eines streich- oder spritzfähigen Materials die Faseranteile, Füllstoffanteile und Bindemittelanteile entsprechend den Ansprüchen 1 bis 12 mit 10 bis 50% einer elastisch oder plastisch vernetzbaren Flüssigkeit vermischt werden.

23. Verfahren zur Herstellung des Weichstoffflachdichtungsmaterials nach Anspruch 21, dadurch gekennzeichnet, dass das Weichstoffflachdichtungsmaterial mit einer im Endzustand elastisch oder plastisch vernetzten Substanz imprägniert wird.

## Claims

1. Flat soft material sealing product, in particular for the manufacture of highly resistant gaskets such as cylinder head gaskets, exhaust flange gaskets and the like for internal combustion engines, made of a non-asbestos and if appropriate metal-reinforced fibre material composed of fibres of inorganic or organic, synthetic or natural origin and organic binders, characterized by the fact that the flat soft material sealing product consists of a fibre fleece composed of an intermixture of at least three different fibre types, namely
a) organic natural fibres which may be thermally or physically conditioned,
b) organic synthetic fibres,
c) mineral fibres which may be thermally or physically conditioned and
d) if appropriate metallic fibres
combined which powdery to fibrillar fillers and at least one organic binder.

2. Flat soft material sealing product according to Claim 1, characterized by the fact that the fibre fleece contains 15 to 60% fibres, 30 to 70% fibrillar and/or powdery fillers and 3 to 15% organic binders.

3. Flat soft material sealing product according to at least one of Claims 1 and 2, characterized by the fact that the fibre component consists of 5 to 40% synthetic fibres, 5 to 25% organic natural fibres which may be chemically or physically conditioned, and 35 to 90% mineral fibres and if appropriate metallic fibres.

4. Flat soft material sealing product according to at least one of Claims 1 to 3, characterized by the fact that the volume percent of the fibres in the fibre fleece prior to any combination with the metallic reinforcement that may be necessary is at least 30%.

5. Flat soft material sealing product according to at least one of Claims 1 to 4, characterized by the fact that at least 10% of the fibres are of the type suitable for sheet forming in a paper or cardboard manufacturing process.

6. Flat soft material sealing product according to at least one of Claims 1 to 5, characterized by the fact that the fibres suitable for sheet forming consist of natural fibres which may be chemically and/or physically conditioned and/or organic synthetic fibres conditioned by fibrillation.

7. Flat soft material sealing product according to at least one of Claims 1 to 6, characterized by the fact that the organic synthetic fibres are polyamide, polyaramide and/or polyacrylonitrile fibres.

8. Flat soft material sealing product according to at least one of Claims 1 to 7, characterized by the fact that the mineral fibres are rock wool fibres, glass wool fibres, slag wool fibres and/or aluminosilicate fibres.

9. Flat soft material sealing product according to at least one of Claims 1 to 8, characterized by the fact that the powdery and/or fibrillar fillers are kaolin, porcelain clay, heavy spar, talcum, gypsum, chalk, titanium dioxide, silicon dioxide, calcium silicate, metal powder, ground slag, diatomaceous earth and/or ground mineral fibres of Claim 8.

10. Flat soft material sealing product according to at least one of Claims 1 to 9, characterized by the fact that the organic natural fibres consist of viscose staple fibre or cotton which may be chemically and/or physically conditioned and/or animal hair fibre.

11. Flat soft material sealing product according to at least one of Claims 1 to 10, characterized by the fact that the length of the organic natural fibres and the organic synthetic fibres is between 0,5 and 6 mm.

12. Flat soft material sealing product according to at least one of Claims 1 to 11, characterized by the fact that the length of the mineral fibres and the metallic fibres is between 0,5 and 4 mm.

13. Method of manufacturing the flat soft material sealing product according to at least one of the Claims 1 to 12, characterized by the fact that the soft material component is processed from an aqueous slurry of the fibre components, the filler components and the binder components into a fibre fleece on a paper or cardboard machine.

14. Method of manufacturing the fibre fleece according to Claim 13, characterized by the fact that the fibre fleece is manufactured on the paper or cardboard machine with a pore volume of at least 10 percent by volume.

15. Method of manufacturing the flat soft material sealing product according to at least one of Claims 1 to 14, characterized by the fact that fibre fleeces are rolled onto one or both sides of a metallic supporting base which may be in the form of a roughened metal sheet.

16. Method of manufacturing a gasket from the flat soft material sealing product according to at least one of Claims 1 to 14, characterized by the fact that the contours of the gasket are punched separately from the fibre fleeces and metallic supporting base and the fibre fleeces and metallic supporting base are combined to form a gasket.

17. Method of manufacturing a flat soft material sealing product according to Claims 15 and 16, characterized by the fact that during combination with the supporting sheet the fibre fleeces are compressed to a pore volume of 10 to 60%.

18. Method of manufacturing a gasket from the flat soft material sealing product of Claim 15, characterized by the fact that the contours of the gasket are punched from the flat soft material sealing product.

19. Method of manufacturing a gasket according to at least one of Claims 15 to 18, characterized by the fact that after at least one of the passages has if necessary been edged with a metallic edge guard, the gasket is impregnated with a substance which in cured state has a plastic or elastic character.

20. Method of manufacturing the flat soft material sealing product according to at least one of Claims 1 to 12, characterized by the fact that a spreadable paste consisting of a fibre component, filler component and binder according to the compositions of Claims 1 to 12 is rolled onto one or both sides of a supporting sheet which if appropriate has been punched to the contours of a gasket.

21. Method of manufacturing the flat soft material sealing product according to at least one of Claims 1 to 12, characterized by the fact that a sprayable material consisting of a fibre component, filler component and binder according to Claims 1 to 12 is moulded on an injection moulding machine into a finished gasket, if appropriate with a metallic reinforcing core, and cured.

22. Method of manufacturing the flat soft material sealing product according to Claims 20 or 21, characterized by the fact that in order to obtain a spreadable or sprayable material the fibre components, filler components and binder components according to Claims 1 to 12 are mixed with 10 to 50% of a liquid which when cured has a plastic or elastic character.

23. Method of manufacturing the flat soft material sealing product according to Claim 21, characterized by the fact that the flat soft material sealing product is impregnated with a substance which cured state has a plastic or elastic character.

**Revendications**

1. Matériau d'étanchéité plat, de consistance tendre, en particulier pour la fabrication de joints d'étanchéité plats, hautement résistants, tels que les joints d'étanchéité de tête de cylindre, les garnitures d'étanchéité de bride d'échappement et les joints similaires pour machines à combustion interne, ledit matériau se composant d'un matériau fibreux et d'un matériau de liaison, le matériau fibreux ne comportant pas d'aminate, étant fait de fibres d'origine synthétique ou naturelle, organique ou inorganique et étant, le cas échéant, renforcé métalliquement, caractérisé en ce que le matériau d'étanchéité plat, de consistance tendre, se compose d'un tissu fait d'au moins trois sortes de fibres différentes mélangées les unes aux autres, notamment:

a) des fibres naturelles organiques, le cas échéant, préparées par un procédé thermique ou physique,

b) des fibres de synthèse organiques, et,

c) des fibres minérales, le cas échéant préparées par un procédé chimique ou physique, de même que de matériaux de remplissage se présentant sous une forme allant de la forme pulvérulante à la forme fibrillaire, et qu'au moins un matériau de liaison organique.

2. Matériau d'étanchéité selon la revendication 1, caractérisé en ce que le tissu de la plaque d'étanchéité plate contient 15 à 60% de fibres, 30 à 70% de matériaux de remplissage sous forme fibrillaire et/ou pulvérulante et 3 à 15% d'un matériau de liaison organique.

3. Matériau d'étanchéité selon au moins une des revendications 1 et 2, caractérisé en ce que l'ensemble des fibres contient 5 à 40% de fibres synthétiques, 5 à 25% de fibres naturelles organiques, le cas échéant, préparées par un traitement chimique ou physique, et 35 à 90% de fibres minérales, et le cas échéant, de fibres métalliques.

4. Matériau d'étanchéité selon au moins une des revendications 1 à 3, caractérisé en ce que le volume des fibres dans le tissu, ayant l'association éventuelle requise avec un renforcement métallique, représente 30% au moins du volume total.

5. Matériau d'étanchéité selon au moins une des revendications 1 à 4, caractérisé en ce que au moins 10% des fibres sont des fibres appropriées pour former une feuille dans un dispositif de fabrication de papier ou de carton.

6. Matériau d'étanchéité selon au moins une des revendications 1 à 5, caractérisé en ce que les fibres appropriées pour former une feuille se composent de fibres naturelles, le cas échéant, préparées par un traitement chimique et/ou physique, et/ou de fibres de synthèse organique préparées par fibrillisation.

7. Matériau d'étanchéité selon au moins une des revendications 1 à 6, caractérisé en ce que les fibres de synthèse sont des fibres de polyamide, des fibres de polyaramide, et/ou des fibres de polyacrylonitrile.

8. Matériau d'étanchéité selon au moins une des revendications 1 à 7, caractérisé en ce que les fibres minérales sont des fibres de laine minérale, des fibres de laine de verre, des fibres de poil de laitier, et/ou des fibres de silicate d'aluminium.

9. Matériau d'étanchéité selon au moins une des revendications 1 à 8, caractérisé en ce que les matériaux de remplissage sous forme pulvérulante ou de fibrillaire sont du kaolin, de la terre à porcelaine, de la barytine, du talc, du gypse, de la craie, du dioxyde de titane, du dioxyde de silicium, du silicate de calcium, de la poudre métallique, du laitier moulu, de la terre à diatomées et/ou les fibres minérales moulues de la revendication 8.

10. Matériau d'étanchéité selon au moins une des revendications 1 à 9, caractérisé en ce que les fibres naturelles organiques se composent de laine de cellulose ou de coton et/ou de laine animale, le cas échéant préparées par un traitement chimique ou physique.

11. Matériau d'étanchéité selon au moins une des revendications 1 à 10, caractérisé en ce que la longueur des fibres naturelles organiques et des fibres de synthèse organiques est comprise entre 0,5 et 6 mm.

12. Matériau d'étanchéité selon au moins une des revendications 1 à 11, caractérisé en ce que la longueur des fibres minérales et des fibres métalliques est comprise entre 0,5 et 4 mm.

13. Procédé pour la fabrication du matériau d'étanchéité selon au moins une des revendications 1 à 12, caractérisé en ce que la partie de matériau tendre de la plaque d'étanchéité plate est obtenue sous forme d'un tissu à partir d'une suspension aqueuse de fibres, de matériaux de remplissage et de matériaux de liaison traités dans une machine à fabriquer le papier ou le carton.

14. Procédé pour la fabrication du tissu selon la revendication 13, caractérisé en ce que le tissu traité dans la machine de fabrication du papier ou du carton est produit avec un volume de pores représentant au moins 10% du volume total.

15. Procédé pour la fabrication du matériau d'étanchéité selon au moins une des revendications 1 à 14, caractérisé en ce que le tissu est laminé sur l'un ou sur les deux côtés d'un support métallique, constitué, le cas échéant, d'une plaque de tôle rêche.

16. Procédé pour la fabrication d'un joint d'étanchéité plat à partir d'un matériau d'étanchéité selon au moins une des revendications 1 à 14, caractérisé en ce que les contours du joint d'étanchéité plat sont découpés séparément dans le tissu et dans le support métallique, et en ce que, ensuite, les tissus et le support métallique sont assemblés en un joint d'étanchéité plat.

17. Procédé pour la fabrication d'un matériau d'étanchéité selon les revendications 15 et 16, caractérisé en ce que le tissu, lors de l'assemblage avec la plaque de support, est comprimé de façon à avoir un volume de pores représentant 10 à 60% du volume total.

18. Procédé pour la fabrication d'un joint d'étanchéité plat à partir du matériau d'étanchéité de la revendication 15, caractérisé en ce que les contours du joint d'étanchéité plat sont découpés dans le matériau d'étanchéité plat.

19. Procédé pour la fabrication d'un joint d'étanchéité plat selon au moins une des revendications 15 à 18, caractérisé en ce que, après la confection éventuelle d'un rebord de protection autour d'au moins une des ouvertures de passage, le joint d'étanchéité plat est imprégné à l'état final avec une substance réticulée plastiquement ou élastiquement.

20. Procédé pour la fabrication du matériau d'étanchéité selon au moins une des revendications 1 à 12, caractérisé en ce que, sur l'un ou sur les deux côtés d'une plaquette de support découpée éventuellement aux contours d'un joint d'étanchéité plat, une masse enductible de fibres, de matériaux de remplissage et de matériau de liaison ayant une composition correspondant aux revendications 1 à 12, est laminée.

21. Procédé pour la fabrication d'un matériau d'étanchéité selon au moins une des revendications 1 à 12, caractérisé en ce qu'un matériau pulvérisable composé de fibres, de matériau de remplissage et de matériau de liaison correspondant aux revendications 1 à 12 est mis en forme et durci pour constituer un joint d'étanchéité plat au moyen d'une presse d'injection avec, le cas échéant, une garniture de renfort métallique.

22. Procédé pour la fabrication du matériau d'étanchéité selon les revendications 20 ou 21, caractérisé en ce que, pour former un matériau injectable ou enductible, les fibres, le matériau de remplissage et le matériau de liaison correspondant aux revendications 1 à 12 sont mélangés avec un liquide réticulable élastiquement ou plastiquement représentant 10 à 50% de l'ensemble.

23. Procédé pour la fabrication du matériau d'étanchéité selon la revendication 21, caractérisé en ce que le matériau d'étanchéité est, à l'état final, imprégné d'une substance réticulable plastiquement ou élastiquement.